# EUROPÄISCHE PATENTANMELDUNG

(11) **EP 4 686 517 A1**
(43) Veröffentlichungstag der Anmeldung: **04.02.2026**
(21) Anmeldenummer: 24191951.3
(22) Anmeldetag: 31.07.2024
(51) Int. Cl.: B22F 10/85, B22F 10/28, B33Y 10/00, B33Y 50/02, G06F 30/23, G06F 113/10, G06F 119/18

(54) **VERFAHREN ZUM ERMITTELN EINER ZIELGRÖSSE, ELEKTRONISCHE RECHENEINRICHTUNG, COMPUTERPROGRAMMPRODUKT UND ELEKTRONISCH LESBARER DATENTRÄGER SOWIE EIN VERFAHREN ZUM HERSTELLEN EINES BAUELEMENTS**

(71) Anmelder: Siemens Aktiengesellschaft, 80333 München (DE)
(72) Erfinder: Kastsian, Darya, 14612 Falkensee (DE); Reznik, Daniel, 13503 Berlin (DE)
(74) Vertreter: Siemens Patent Attorneys

(57) **Zusammenfassung**

Die Erfindung betrifft ein Verfahren zum Ermitteln einer ein thermomechanisches Verhalten beim additiven Fertigen eines Bauelements charakterisierenden Zielgröße, mit den mittels einer elektronischen Recheneinrichtung (12) durchgeführten Schritten (S1 bis S5): Erzeugen eines Modells (14) des mittels additiver Fertigung herzustellenden Bauelements; Ermitteln einer sich kontinuierlich in eine Bewegungsrichtung (20) entlang des Modells (14) bewegenden Temperaturfront (22), welche ein Abkühlungsverhalten des Bauelements bei der additiven Fertigung charakterisiert; Ermitteln eines Temperaturfelds (24) des Modells (14) in Abhängigkeit von der Temperaturfront (22); Ermitteln eines Teilbereichs (26) des Modells (14), wobei in dem Teilbereich (26) Temperaturwerte des ermittelten Temperaturfelds (24) kleiner sind als ein Temperaturschwellenwert und sich eine in der Bewegungsrichtung (20) äußere Grenze (28) des Teilbereichs (26) in der Bewegungsrichtung (20) mit der Temperaturfront (22) mitbewegt; und Ermitteln einer durch thermisches Schrumpfen verursachten Verformung und/oder eines Spannungszustandes des Teilbereichs (26) in Abhängigkeit von dem ermittelten Temperaturfeld (24).

## Beschreibung

Die Erfindung betrifft ein Verfahren zum Ermitteln einer ein thermomechanisches Verhalten beim additiven Fertigen eines Bauelements charakterisierenden Zielgröße gemäß dem Patentanspruch 1. Ferner betrifft die Erfindung eine elektronische Recheneinrichtung, ein Computerprogrammprodukt sowie einen elektronisch lesbaren Datenträger gemäß den Patentansprüchen 8, 9 und 10. Des Weiteren betrifft die Erfindung ein Verfahren zum Herstellen eines Bauelements gemäß dem Patentanspruch 11.

Bauelemente können mittels additiver Fertigung hergestellt werden. Bei schmelzmetallurgischen additiven Fertigungsverfahren, beispielsweise schmelzmetallurgischen Pulverbettverfahren, können prozessbedingt Verzüge und Eigenspannungen des hergestellten Bauelements entstehen, was durch ein Schrumpfen eines Materials des Bauelements beim Erstarren des Materials bedingt sein kann. Für ein Ermitteln solcher prozessbedingter Verzüge und Eigenspannungen sind verschiedene Methoden bekannt. Dabei kann ein zu simulierendes Bauteil vertikal, also in der gleichen Ebene, in der ein auch als Schichtaufbau bezeichneter Aufbau beim additiven Fertigen erfolgt, in eine definierte Anzahl von Lagen unterteilt werden. dabei entsprechen diese Lagen üblicherweise nicht den tatsächlich real bei der additiven Fertigung verwendeten Aufbaulagen, die sich durch eine sehr dünne Dicke von beispielsweise 20 bis 100 µm auszeichnen. Stattdessen können aus Gründen numerischer Performance sogenannte Makrolagen von beispielsweise 1 bis 5 mm Stärke verwendet werden. Bei der Simulation können diese Makrolagen nacheinander aktiviert werden. Im Moment der Aktivierung kann davon ausgegangen werden, dass sich jeweils die ganze Lage auf einer hohen Temperatur, beispielsweise einer Solidustemperatur einer verwendeten Legierung, befindet. Im Moment der Aktivierung kann die jeweils aktivierte Lage zu schrumpfen beginnen. Die Schrumpfung kann allerdings durch die darunterliegenden, bereits verfestigten Lagen behindert werden, sodass der entstandene Verzug kleiner sein kann, als der durch eine vorgegebene Schrumpfungsrate der Schicht maximal erreichbare Verzug. Dies kann zur Ausbildung von Eigenspannungszuständen führen. Die Lagen, die sich oberhalb der jeweils aktivierten Lage befinden, können zum Moment der Aktivierung dieser Lage nicht existent sein, das heißt mechanisch inaktiv. Daher können die von Elementen inaktiver Lagen akkumulierten Dehnungen bei der Aktivierung zu Null gesetzt werden, wodurch sie nicht zu den Verschiebungen und Spannungen der aktivierten Lagen beitragen. Diese beschriebene Vorgehensweise kann auch als "Lage zu Lage Simulation" (Layer by Layer Simulation) bezeichnet werden. Ein Simulationsergebnis einer solchen Simulation kann allerdings von einer beliebigen und unphysikalischen Wahl einer Makrolagen-Dicke abhängen, wodurch die Wahl der Makrolagen-Dicke einen unerwünschten Einfluss auf das Simulationsergebnis haben kann. Dies kann sich negativ auf eine Genauigkeit beim Ermitteln eines thermomechanischen Verhaltens beim additiven Fertigen des Bauelements auswirken.

Aufgabe der vorliegenden Erfindung ist es, ein Verfahren zum Ermitteln einer ein thermomechanisches Verhalten beim additiven Fertigen eines Bauelements charakterisierenden Zielgröße, eine elektronische Recheneinrichtung, ein Computerprogrammprodukt, einen elektronisch lesbaren Datenträger sowie ein Verfahren zum Herstellen eines Bauelements zu schaffen, sodass das thermomechanische Verhalten des Bauelements beim additiven Fertigen besonders präzise ermittelt werden kann.

Diese Aufgabe wird erfindungsgemäß durch die Gegenstände der unabhängigen Patentansprüche gelöst. Vorteilhafte Ausgestaltungen und Weiterbildungen sowie Vorteile der Erfindung sind in den abhängigen Patentansprüchen sowie in der Beschreibung und in den Zeichnungen gezeigt.

Ein erster Aspekt der Erfindung betrifft ein Verfahren zum Ermitteln, insbesondere Berechnen einer ein thermomechanisches Verhalten beim additiven Fertigen eines Bauelements charakterisierenden Zielgröße. Unter dem Verfahren kann daher auch ein Verfahren zum Ermitteln des thermomechanischen Verhaltens beim additiven Fertigen des Bauelements verstanden werden. Die Zielgröße ist somit eine Zielgröße, welche das thermomechanische Verhalten des Bauelements charakterisiert beziehungsweise abbildet, wobei das thermomechanische Verhalten insbesondere ein thermomechanisches Verhalten ist, welches das Bauelement bei dem additiven Fertigen, das heißt insbesondere während des additiven Fertigens und/oder nach dem additiven Fertigen, zeigt.

Das Verfahren umfasst zumindest folgende Schritte, welche mittels wenigstens einer elektronischen Recheneinrichtung durchgeführt werden:
- a) Erzeugen eines Modells des mittels additiver Fertigung herzustellenden Bauelements; und
- b) Ermitteln, insbesondere berechnen und/oder Festsetzen, einer sich kontinuierlich in eine Bewegungsrichtung entlang des Modells bewegenden Temperaturfront, welche ein Abkühlungsverhalten des Bauelements bei der additiven Fertigung charakterisiert, wobei die Bewegungsrichtung einer Auftragsrichtung entspricht, in welcher bei der additiven Fertigung des Bauelements mehrere Schichten aufeinander aufzutragen sind beziehungsweise aufgetragen werden; und
- c) Ermitteln, insbesondere Berechnen und/oder Auswerten, eines Temperaturfelds des Modells in Abhängigkeit von der Temperaturfront; und
- d) Ermitteln, insbesondere Festsetzen, eines Teilbereichs des Modells, wobei in dem Teilbereich Temperaturwerte des ermittelten Temperaturfelds kleiner sind als ein, insbesondere vorgegebener oder vordefinierter, Temperaturschwellenwert und sich eine in der Bewegungsrichtung äußere Grenze des Teilbereichs in der Bewegungsrichtung, insbesondere kontinuierlich, mit der Temperaturfront mitbewegt; und
- e) Ermitteln, insbesondere Berechnen, einer durch thermisches Schrumpfen verursachten Verformung zumindest des ersten Teilbereichs in Abhängigkeit von dem ermittelten Temperaturfeld und/oder Ermitteln, insbesondere Berechnen, eines, insbesondere mechanischen, Spannungszustands des ersten Teilbereichs in Abhängigkeit von dem ermittelten Temperaturfeld.

Darunter kann insbesondere Folgendes verstanden werden: In Schritt a) wird mittels der elektronischen Recheneinrichtung das Modell des mittels additiver Fertigung hergestellten beziehungsweise herzustellenden Bauelements erzeugt. Das Modell ist vorzugsweise dreidimensional. Das Modell umfasst vorzugsweise zumindest ein Geometriemodell des Bauelements. Unter dem Modell wird vorliegend ein virtuelles Abbild des mittels additiver Fertigung herzustellenden oder hergestellten Bauelements verstanden. Bei Schritt b) wird mittels der elektronischen Recheneinrichtung die Temperaturfront ermittelt, welche sich kontinuierlich in die Bewegungsrichtung entlang des Modells bewegt. In anderen Worten durchläuft die Temperaturfront das Modell, also beispielsweise von einer ersten Seite des Modells zu einer von der ersten Seite unterschiedlichen, zweiten Seite des Modells, in der Bewegungsrichtung. Darunter, dass die Temperaturfront das Abkühlungsverhalten des Bauelements bei der additiven Fertigung charakterisiert, kann insbesondere verstanden werden, dass eine Abkühlung des bei der additiven Fertigung des Bauelements aufgetragenen Materials von der sich bewegenden Temperaturfront abgebildet beziehungsweise simuliert wird. Die Auftragsrichtung kann auch als Materialauftragungsrichtung oder Schichtauftragungsrichtung bezeichnet werden. Bei Schritt c) wird mittels der elektronischen Recheneinrichtung das Temperaturfeld des Modells in Abhängigkeit von der, insbesondere ermittelten, Temperaturfront ermittelt. Dies bedeutet, dass an unterschiedlichen Positionen des Modells jeweils in Abhängigkeit von der Temperaturfront eine jeweilige Temperatur des Modells, das heißt ein jeweiliger Temperaturwert des Modells, ermittelt beziehungsweise simuliert wird. Bei Schritt d) wird mittels der elektronischen Recheneinrichtung der Teilbereich des Modells ermittelt. Dies bedeutet insbesondere, dass, insbesondere ausschließlich, diejenigen Gebiete des Modells, in welchen die Temperaturwerte des ermittelten Temperaturfelds kleiner sind als der Temperaturschwellenwert, als der Teilbereich festgelegt wird. Der Teilbereich kann auch als aktivierter Bereich bezeichnet werden. Dadurch, dass die äußere Grenze des Teilbereichs sich in die Bewegungsrichtung mit der Temperaturfront mitbewegt, dehnt der Teilbereich sich in der Bewegungsrichtung aus. Bei Schritt e) wird die durch thermisches Schrumpfen verursachte Verformung des Teilbereichs mittels der elektronischen Recheneinrichtung zumindest in Abhängigkeit von dem ermittelten Temperaturfeld, beispielsweise als die Zielgröße, ermittelt, insbesondere berechnet. Alternativ oder zusätzlich wird bei Schritt e) der Spannungszustand des Teilbereichs mittels der elektronischen Recheneinrichtung zumindest in Abhängigkeit von dem ermittelten Temperaturfeld, beispielsweise als die Zielgröße, ermittelt, insbesondere berechnet. In anderen Worten wird das ermittelte Temperaturfeld als Eingangsgröße verwendet, um mittels der elektronischen Recheneinrichtung die durch das thermische Schrumpfen verursachte Verformung und/oder den Spannungszustand des Teilbereichs des Modells zu ermitteln, insbesondere berechnen. Somit kann die Verformung eine erste Zielgröße sein und der Spannungszustand kann eine zweite Zielgröße sein. Die Verformung kann auch als Verzug bezeichnet werden. Unter dem Spannungszustand kann insbesondere eine mechanische Spannung, beispielsweise ein Spannungsfeld, des Teilbereichs verstanden werden. Vorzugsweise handelt es sich bei dem Ermitteln in Schritt e) um ein Ermitteln durch Berechnung.

Somit kann die Berechnung von Verzug und Spannungszustand in dem Schritt e) erfolgen. Dies bedeutet, dass die Verformung und der Spannungszustand in einem gemeinsamen, insbesondere gekoppelten, Schritt berechnet werden können. Hierfür kann mittels Finiter-Elemente Berechnung ein Zustand minimaler elastischer Energie ausgerechnet werden, bei der sich Kräfte durch thermomechanische Schrumpfung und Reaktionskräfte umgebender Bereiche im Gleichgewicht befinden, das heißt sich gerade die Waage halten, und die dabei auftretenden Verzüge sind beispielsweise Ergebnis, insbesondere Teilergebnis, der Rechnung in Schritt e).

Der Erfindung liegen insbesondere die folgenden Erkenntnisse und Überlegungen zugrunde: Bei dem erfindungsgemäßen Verfahren kann durch die sich kontinuierlich in der Bewegungsrichtung bewegende Temperaturfront statt einer schichtweisen Abkühlung von je einer Makrolage von einer sich kontinuierlich in der Bewegungsrichtung bewegenden thermischen Front ausgegangen werden. Im Gleichtakt mit der sich in die Bewegungsrichtung bewegenden Temperaturfront kann eine sich, insbesondere kontinuierlich, bewegende mechanische Aktivierung von Gebieten des Modells stattfinden, insbesondere sobald eine Temperatur der Temperaturfront sich unterhalb dem Temperaturschwellenwert einstellt. Die aktivierten Gebiete können somit der Teilbereich sein, in welchem die durch thermisches Schrumpfen verursachte Verformung ermittelt werden kann. Insbesondere durch die sich kontinuierlich bewegende Temperaturfront, findet bei dem erfindungsgemäßen Verfahren keine künstliche Unterteilung des Modells, das heißt insbesondere eines Simulationsgebiets, in die eingangs genannten Makrolagen statt, wodurch das thermomechanische Verhalten beziehungsweise die Zielgröße besonders präzise ermittelt werden kann. Dies bedeutet, dass die eingangs genannten Nachteile der Layer by Layer Prozesssimulation von additiven schmelzmetallurgischen Prozessen durch die vorliegende Erfindung umgangen werden können. Ferner kann das erfindungsgemäße Verfahren eine numerisch performante Prozesssimulation der additiven Fertigung, das heißt insbesondere eines additiven Aufbauprozesses, mit Hilfe numerischer Methoden, wie beispielsweise der Methode der finiten Elemente (FEM), erlauben.

In weiterer Ausgestaltung ist es vorgesehen, dass der Temperaturschwellenwert einer Solidustemperatur eines Materials des Bauelements entspricht. Unter dem Material wird dabei vorliegend ein Material verstanden, welches bei der additiven Fertigung zum zumindest teilweisen Bilden des Bauelements schichtweise aufgetragen wird beziehungsweise aufzutragen ist. Unter der Solidustemperatur kann insbesondere eine Temperatur einer Legierung, einer Keramik, eines Gesteins oder eines Minerals verstanden werden, wobei bei der Solidustemperatur und unterhalb der Solidustemperatur die Legierung beziehungsweise die Keramik beziehungsweise das Gestein beziehungsweise das Mineral vollständig in fester Phase vorliegt. Dadurch kann das thermische Schrumpfen besonders präzise ermittelt werden, welches auf einer Volumenverkleinerung des Materials des Bauelements infolge einer Erstarrung des Materials, das heißt infolge eines Übergangs in den festen Aggregatszustand, resultiert.

In weiterer Ausgestaltung ist es vorgesehen, dass der Schritt d) ein Ermitteln, insbesondere Festsetzen, eines, insbesondere von dem ersten Teilbereich unterschiedlichen, zweiten Teilbereichs des Modells umfasst, wobei in dem zweiten Teilbereich die Temperaturwerte des ermittelten Temperaturfelds mindestens so groß sind wie der Temperaturschwellenwert. In anderen Worten werden mittels der elektronischen Recheneinrichtung diejenigen Gebiete des Modells, in welchen die Temperaturwerte des ermittelten Temperaturfelds so groß sind wie der Temperaturschwellenwert oder größer als der Temperaturschwellenwert sind, als der zweite Teilbereich festgelegt.

In weiterer Ausgestaltung ist es vorgesehen, dass der Schritt e) ein Ermitteln, insbesondere Berechnen, einer Verformung des zweiten Teilbereichs umfasst. Dies bedeutet, dass bei dem Schritt e) die Verformung, insbesondere ein Verformungsfeld, des zweiten Teilbereichs mittels der elektronischen Recheneinrichtung ermittelt, insbesondere berechnet, wird.

Dieser Ausführungsform liegen insbesondere die folgenden Erkenntnisse und Überlegungen zugrunde: Der Teilbereich, welcher auch als erster Teilbereich bezeichnet werden kann, ist ein bereits von der Temperaturfront erfasster Teilbereich. Ferner charakterisiert der erste Teilbereich einen bereits erstarrten Teilbereich des Bauelements. Dies bedeutet, dass das bei der additiven Fertigung aufgetragene Material in dem ersten Teilbereich bereits erstarrt ist. Der zweite Teilbereich charakterisiert einen Teilbereich des Bauelements, in welchem zum aktuellen Zeitpunkt das bei der additiven Fertigung aufzutragende Material noch gar nicht aufgetragen ist. Dies bedeutet, dass in dem zweiten Teilbereich das Material noch aufgetragen wird, allerdings zu einem späteren Zeitpunkt. Insbesondere ist der zweite Teilbereich noch nicht von der Temperaturfront erfasst. Der zweite Teilbereich ist also sozusagen ein zum aktuell simulierten Zeitpunkt der additiven Fertigung real noch nicht existierender virtueller Bereich, welcher zum aktuellen Zeitpunkt sozusagen lediglich in der Simulation vorliegt. In dem zweiten Teilbereich kann in dem Modell das Material in flüssigem Aggregatszustand simuliert werden. Durch das Bewegen der Temperaturfront, und insbesondere durch das in Abhängigkeit von dem ermittelten Temperaturfeld und dadurch auch in Abhängigkeit von der sich bewegenden Temperaturfront, ermittelten Teilbereich, kann der zweite Teilbereich, das heißt insbesondere einzelne Stücke des zweiten Teilbereichs, in den ersten Teilbereich übergehen. Eine Grenze zwischen den Teilbereichen kann sich also in der ersten Bewegungsrichtung mit der Temperaturfront mitbewegen. Durch diese Beschreibung des Modells in Form des ersten und des zweiten Teilbereichs kann das thermomechanische Verhalten des Bauelements auf besonders aufwandsarme Weise und/oder auf numerisch besonders stabile Weise ermittelt werden.

In weiterer Ausgestaltung ist es vorgesehen, dass zum Ermitteln der Verformung des zweiten Teilbereichs eine virtuelle Steifigkeit verwendet wird. Dies bedeutet, dass mittels der elektronischen Recheneinrichtung die Verformung, das heißt insbesondere das Verformungsfeld, des zweiten Teilbereichs in Abhängigkeit von der virtuellen Steifigkeit ermittelt, insbesondere berechnet, wird. Die virtuelle Steifigkeit ist mindestens tausendmal, insbesondere mindestens zehntausendmal kleiner als eine Steifigkeit des Materials des Bauelements. Unter der Steifigkeit des Bauelements wird dabei vorliegend eine reale Steifigkeit des bei der additiven Fertigung aufzubringenden Materials verstanden. Dadurch kann sich in dem Modell der zweite Teilbereich bei der Verformung des ersten Teilbereichs mit diesem mitbewegen, wodurch insbesondere im Grenzbereich zwischen den Teilbereichen, die Verformung des ersten Teilbereichs besonders präzise, das heißt insbesondere ohne negative Beeinflussung durch den zweiten Teilbereich, ermittelt werden kann.

In weiterer Ausgestaltung ist es vorgesehen, dass beim Ermitteln der Verformung des zweiten Teilbereichs der zweite Teilbereich zumindest in einer sich senkrecht zu der Bewegungsrichtung erstreckenden Richtung gefedert fixiert wird beziehungsweise ist. In anderen Worten wird beim Ermitteln der Verschiebung des zweiten Teilbereichs für den zweiten Teilbereich eine Randbedingung festgesetzt, gemäß welcher der zweite Teilbereich gefedert gehalten wird. Dies bedeutet, dass der zweite Teilbereich zumindest teilweise mit einer nummerisch definierten Feder festgehalten werden kann. Diese Feder kann auch als virtuelle Feder bezeichnet werden. Unter dem gefederten Fixieren des zweiten Teilbereichs kann insbesondere ein gefedertes fixieren zumindest eines Teils, das heißt eines Teilgebietes, des zweiten Teilbereichs verstanden werden. Der Teil beziehungsweise das Teilgebiet des zweiten Teilbereichs ist beispielsweise ein Rand und/oder ein, insbesondere sich innerhalb des Rands erstreckendes, Volumen. Somit kann es vorgesehen sein, dass beim Ermitteln der Verformung des zweiten Teilbereichs wenigstens der Rand des zweiten Teilbereichs und/oder mehrere Punkte oder jeder Punkt eines Volumens des zweiten Teilbereichs zumindest in einer sich senkrecht zu der Bewegungsrichtung erstreckenden Richtung gefedert fixiert wird beziehungsweise ist. In anderen Worten wird beim Ermitteln der Verschiebung des zweiten Teilbereichs für den Rand und/oder die Punkte des Volumens des zweiten Teilbereichs eine Randbedingung festgesetzt, gemäß welcher der Rand beziehungsweise die Punkte des Volumens gefedert gehalten wird. Dies bedeutet, dass der Rand des zweiten Teilbereichs mit der nummerisch definierten Feder festgehalten werden kann und/oder das Volumen mit einer numerisch definierten Volumenfeder festgehalten werden kann. Die Feder kann eindimensional, zweidimensional oder dreidimensional sein. Durch die Volumenfeder kann an jedem Massepunkt, insbesondere 3D-Massepunkt, des zweiten Teilbereichs angreifen und dadurch den zweiten Teilbereich in seiner Position halten.

Dieser Ausführungsform liegen insbesondere die folgenden Erkenntnisse und Überlegungen zugrunde: Bei dem Ermitteln der Verformung des zweiten Teilbereichs werden sozusagen Teile des Modells simuliert, welche zum aktuell simulierten Zeitpunkt der additiven Fertigung real nicht beziehungsweise noch nicht existieren, denn in diesen Bereichen ist bei der additiven Fertigung zum aktuellen Zeitpunkt noch gar kein Material aufgetragen worden. Durch Kopplung der Teilbereiche kann allerdings in dem zweiten Teilbereich eine Verformung auftreten, bei welcher der zweite Teilbereich beispielsweise, insbesondere senkrecht zu der Bewegungsrichtung, beispielsweise seitlich, eingeschnürt wird. Beim realen Prozess wird bei der additiven Fertigung das Material allerdings ohne eine solche Einschnürung, das heißt insbesondere weiter außen, aufgetragen. Durch die genannte Fixierung, beispielsweise des Rands und/oder des Volumens, mittels der numerischen Feder kann das Verschieben des Teilbereichs, insbesondere des Rands und/oder des Volumens, und somit insbesondere die Einschnürung, vermieden werden, und zwar auf numerisch besonders aufwandsarme und/oder besonders stabile Weise.

In weiterer Ausgestaltung ist es vorgesehen, dass das additive Fertigen Laserstrahlschmelzen, insbesondere im Pulverbett, oder Elektronenstrahlschmelzen, insbesondere im Pulverbett, ist. Dies bedeutet, dass das Bauelement mittels Laserstrahlschmelzen oder Elektronenstrahlschmelzen herzustellen ist beziehungsweise hergestellt wird.

In weiterer Ausgestaltung umfasst das Verfahren folgende Schritte:
- Herstellen eines Probekörpers, welcher insbesondere das Bauelement charakterisiert, mittels additiver Fertigung; und
- messtechnisches Ermitteln einer das thermomechanische Verhalten beim additiven Fertigen des Probekörpers charakterisierenden Zielgröße;
- simulatives Ermitteln der das thermomechanische Verhalten beim additiven Fertigen des Probekörpers charakterisierenden Zielgröße, indem zumindest die Schritte a) bis e) mittels der elektronischen Recheneinrichtung, insbesondere anstatt beziehungsweise zusätzlich für das Bauelement, für den Probekörper durchgeführt werden; und
- Ermitteln, insbesondere Berechnen, einer effektiven Wärmedehnung aus der messtechnisch ermittelten Zielgröße und der simulativ ermittelten Zielgröße.

Darunter kann insbesondere Folgendes verstanden werden: Durch das messtechnische Ermitteln der Zielgröße kann das thermomechanische Verhalten beim additiven Fertigen des Probekörpers gemessen werden, das heißt messtechnisch bestimmt werden. Jedoch kann es fraglich sein, inwiefern bei, insbesondere gestalterischer, Variation des Bauelements und/oder des additiven Fertigungsprozesses, das messtechnisch ermittelte Verhalten noch Gültigkeit besitzt. Diese Nachteile können mit dieser Ausführungsform überwunden werden. So kann zunächst der Probekörper hergestellt werden und die Zielgröße messtechnisch ermittelt werden. Anschließend kann das simulative Ermitteln der Zielgröße anhand des Probekörpers durchgeführt werden. Dies bedeutet, dass die Schritte a) bis e) für den mittels additiver Fertigung hergestellten Probekörper durchgeführt werden. In anderen Worten werden die Schritte a) bis e) anhand des Probekörpers durchgeführt. dies bedeutet, dass bei den Schritten a) bis e) als das Modell ein Modell des Probekörpers verwendet wird.

Ferner ist es vorzugsweise vorgesehen, dass in Schritt e) zum Ermitteln der durch das thermische Schrumpfen verursachten Verschiebung des Teilbereichs des Modells des Bauelements und/oder zum Ermitteln des Spannungszustandes des Teilbereichs des Modells des Bauelements die ermittelte effektive Wärmedehnung als Wärmdehnungskoeffizient verwendet wird. Darunter kann insbesondere verstanden werden, dass nach dem Durchführen der Schritte a) bis e) für den Probekörper beziehungsweise dessen Modell, die Schritte a) bis e) für das Bauelement durchgeführt werden, wodurch die das thermomechanische Verhalten beim additiven Fertigen des Bauelements charakterisierende Zielgröße ermittelt werden kann. Dies erfolgt jedoch derart, dass in Schritt e) zum Ermitteln der durch das thermische Schrumpfen verursachten Verschiebung des ersten Teilbereichs des Modells des Bauelements und/oder zum Ermitteln des Spannungszustandes des Teilbereichs des Modells des Bauelements die ermittelte effektive Wärmedehnung verwendet wird. In anderen Worten wird in Schritt e) die durch das thermische Schrumpfen verursachte Verformung des Teilbereichs mittels der elektronischen Recheneinrichtung in Abhängigkeit von dem ermittelten Temperaturfeld und der ermittelten effektiven Wärmedehnung ermittelt, insbesondere berechnet. Alternativ oder zusätzlich wird in Schritt e) der Spannungszustand mittels der elektronischen Recheneinrichtung in Abhängigkeit von dem ermittelten Temperaturfeld und der ermittelten effektiven Wärmedehnung ermittelt, insbesondere berechnet. Dadurch können die bei der Vermessung des Probekörpers gewonnenen Erkenntnisse auf das Bauelement übertragen werden, wodurch das Ermitteln des thermomechanischen Verhaltens des Bauelements Teil eines Auswerteschritts des messtechnischen Ermittelns des Probekörpers sein kann.

Ein zweiter Aspekt der Erfindung betrifft eine elektronische Recheneinrichtung, welche gezielt dazu eingerichtet ist, ein Verfahren gemäß dem ersten Aspekt der Erfindung durchzuführen. Somit ist die elektronische Recheneinrichtung zumindest gezielt dazu eingerichtet, die Schritte a) bis e) des Verfahrens gemäß dem ersten Aspekt der Erfindung durchzuführen. Vorzugsweise ist die elektronische Recheneinrichtung gezielt dazu eingerichtet, das simulative Ermitteln der das thermomechanische Verhalten beim additiven Fertigen des Probekörpers charakterisierenden Zielgröße und das Ermitteln der effektiven Wärmedehnung nach dem Verfahren gemäß dem ersten Aspekt der Erfindung durchzuführen. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Ein dritter Aspekt der Erfindung betrifft ein Computerprogramm, welches direkt in einen Speicher der elektronischen Recheneinrichtung ladbar ist oder geladen wird, mit Programm-Mitteln, um die Schritte des Verfahrens gemäß dem ersten Aspekt der Erfindung, das heißt insbesondere um das Verfahren gemäß dem ersten Aspekt der Erfindung, auszuführen, wenn das Programm in der elektronischen Recheneinrichtung ausgeführt wird. Die elektronische Recheneinrichtung ist vorzugsweise eine elektronische Recheneinrichtung gemäß dem zweiten Aspekt der Erfindung. Die Programm-Mittel können auch als Programm-Code-Mittel bezeichnet werden. Mittels der Programm-Mittel können zumindest die Schritte a) bis e) des Verfahrens gemäß dem ersten Aspekt der Erfindung ausgeführt werden. Ferner können mittels der Programm-Code-Mittel vorzugsweise das simulative Ermitteln der Zielgröße und das Ermitteln der effektiven Wärmedehnung ausgeführt werden. Vorteile und vorteilhafte Ausgestaltungen des ersten und des zweiten Aspekts der Erfindung sind als Vorteile und vorteilhafte Ausgestaltungen des dritten Aspekts der Erfindung anzusehen und umgekehrt.

Ein vierter Aspekt der Erfindung betrifft einen elektronisch lesbaren Datenträger mit darauf gespeicherten elektronisch lesbaren Steuerinformationen, welche zumindest ein Computerprogrammprodukt gemäß dem dritten Aspekt der Erfindung umfassen und derart ausgestaltet sind, dass sie bei Verwendung des Datenträgers in einer elektronischen Recheneinrichtung, insbesondere gemäß dem zweiten Aspekt der Erfindung, ein Verfahren gemäß dem ersten Aspekt der Erfindung durchführen. Unter dem Durchführen des Verfahrens gemäß dem ersten Aspekt der Erfindung wird dabei zumindest das Durchführen der Schritte a) bis e) des Verfahrens gemäß dem ersten Aspekt der Erfindung verstanden. Ferner umfasst das Durchführen des Verfahrens gemäß dem ersten Aspekt der Erfindung vorzugsweise auch das Durchführen des simulativen Ermittelns und des Ermittelns der effektiven Wärmedehnung. Vorteile und vorteilhafte Ausgestaltungen des ersten, des zweiten und des dritten Aspekts der Erfindung sind als Vorteile und vorteilhafte Ausgestaltungen des vierten Aspekts der Erfindung anzusehen und umgekehrt.

Ein fünfter Aspekt der Erfindung betrifft ein Verfahren zum Herstellen eines Bauelements, bei welchem das Bauelement in Abhängigkeit von der nach einem Verfahren gemäß dem ersten Aspekt der Erfindung ermittelten Zielgröße mittels additiver Fertigung hergestellt wird. Dies bedeutet, dass das Bauelement beispielsweise, insbesondere virtuell, in Abhängigkeit von der ermittelten Zielgröße ausgelegt, insbesondere dimensioniert, wird und/oder ein additiver Fertigungsprozess zum Herstellen des Bauelements, insbesondere virtuell, in Abhängigkeit von der ermittelten Zielgröße festgelegt wird, wobei anschließend das Bauelement gemäß der Auslegung und/oder gemäß dem festgelegten additiven Fertigungsprozess tatsächlich hergestellt wird. Vorteile und vorteilhafte Ausgestaltungen des ersten, des zweiten, des dritten und des vierten Aspekts der Erfindung sind als Vorteile und vorteilhafte Ausgestaltungen des fünften Aspekts der Erfindung anzusehen und umgekehrt.

Während die vorliegende Erfindung im Detail unter Bezugnahme auf bestimmte Ausführungsformen beschrieben wurde, sollte man sich bewusst sein, dass die vorliegende Erfindung nicht auf diese Ausführungsform beschränkt ist. In Anbetracht der vorliegenden Erfindung sind für den Fachmann viele Modifikationen und Variationen möglich, ohne dass der Anwendungsbereich der verschiedenen Ausführungsformen der vorliegenden Erfindung, wie sie hier beschrieben sind, verlassen wird. Der Umfang der vorliegenden Erfindung wird daher eher durch die folgenden Ansprüche als durch die vorangehende Beschreibung angegeben. Alle Änderungen, Modifikationen und Variationen, die in den Bedeutungs- und Äquivalenzbereich der Ansprüche fallen, sind in deren Anwendungsbereich zu berücksichtigen.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Die Erfindung wird im Folgenden anhand konkreter Ausführungsbeispiele und zugehöriger schematischer Zeichnungen näher erläutert: In den Figuren können gleiche oder funktionsgleiche Elemente mit denselben Bezugszeichen versehen sein. Die Beschreibung gleicher oder funktionsgleicher Elemente wird gegebenenfalls nicht notwendiger Weise bezüglich verschiedener Figuren wiederholt.

Es zeigen:
- Fig. 1: ein schematisches Ablaufdiagramm zum Veranschaulichen eines erfindungsgemäßen Verfahrens zum Ermitteln einer ein thermomechanisches Verhalten beim additiven Fertigen eines Bauelements charakterisierenden Zielgröße;
- Fig. 2: eine schematische Darstellung eines Modells eines Bauelements zum Veranschaulichen des erfindungsgemäßen Verfahrens gemäß Fig. 1;
- Fig. 3: eine schematische Perspektivansicht eines Modells zum Veranschaulichen eines herkömmlichen Verfahrens;
- Fig. 4: eine weitere schematische Perspektivansicht eines Modells zum Veranschaulichen eines herkömmlichen Verfahrens;
- Fig. 5: eine schematische Darstellung einer mittels eines herkömmlichen Verfahrens ermittelten Spannungsverteilung;
- Fig. 6: eine weitere schematische Darstellung einer mittels eines herkömmlichen Verfahrens ermittelten Spannungsverteilung;
- Fig. 7: eine schematische Darstellung einer mittels des erfindungsgemäßen Verfahrens gemäß Fig. 1 ermittelten Spannungsverteilung; und
- Fig. 8: ein schematisches Ablaufdiagramm zum Veranschaulichen eines erfindungsgemäßen Verfahrens zum Herstellen eines Bauelements.

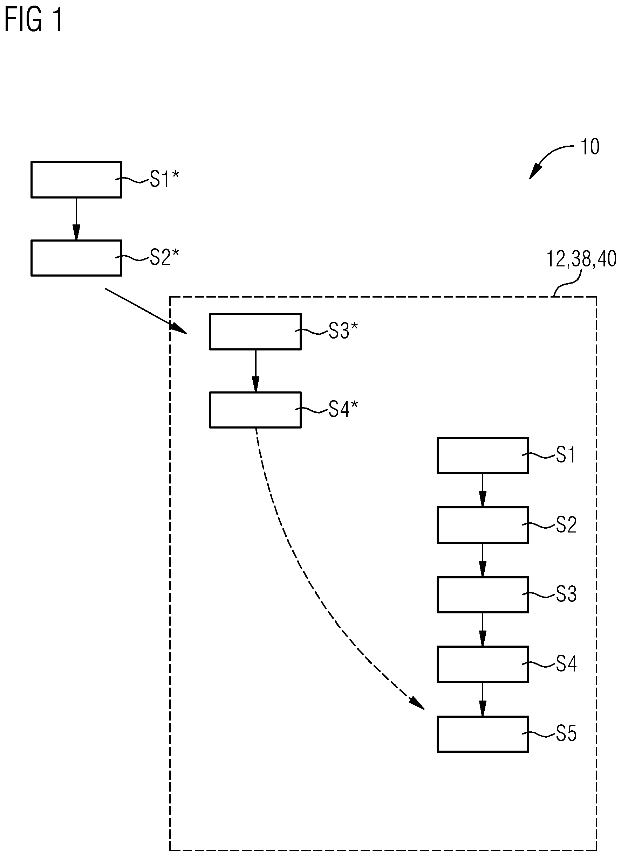

Fig. 1 zeigt in einer schematischen Perspektivansicht ein Verfahrensdiagramm eines Verfahrens 10 zum Ermitteln einer ein thermomechanisches Verhalten beim additiven Fertigen eines Bauelements charakterisierenden Zielgröße. Das Verfahren 10 wird zumindest teilweise, insbesondere überwiegend oder vollständig, mittels einer elektronischen Recheneinrichtung 12 durchgeführt. Die elektronische Recheneinrichtung 12 ist somit gezielt dazu eingerichtet, das Verfahren 10 zumindest teilweise, insbesondere überwiegend oder vollständig, durchzuführen.

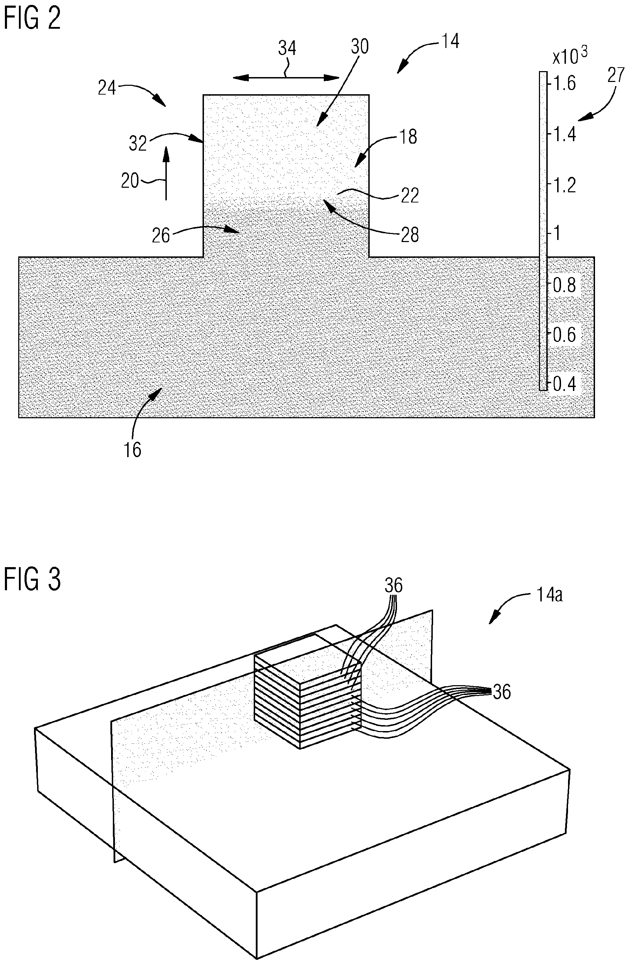

Bei einem Schritt a) wird ein Modell 14 des mittels additiver Fertigung herzustellenden Bauelements mittels der elektronischen Recheneinrichtung 12 erzeugt. Der Schritt a) kann auch als Schritt S1 bezeichnet werden, wie in Fig. 1 veranschaulicht. Das Modell 14 ist in Fig. 2 in einer schematischen Darstellung, beispielsweise einer schematischen Teilschnittansicht, gezeigt. Das Modell 14 kann auch als Simulationsmodell oder Simulationsgebiet bezeichnet werden. Das Modell 14 ist somit vorzugsweise dazu bestimmt, das thermomechanische Verhalten beim additiven Fertigen des Bauelements, insbesondere simulativ, zu ermitteln. In dem in Fig. 2 gezeigten Beispiel ist das Bauelement, insbesondere das aufzutragende beziehungsweise aufgetragene Material 18, ein würfelförmiger Körper.

Bei dem additiven Fertigen des Bauelements wird beispielsweise auf einen Trägerkörper 16, welcher auch als Substrat bezeichnet werden kann, Material 18, insbesondere schichtweise, aufgetragen. Das Material 18 ist somit ein mittels additiver Fertigung aufgetragenes beziehungsweise aufzutragendes Material 18. Das additive Fertigen ist beispielsweise Laserstrahlschmelzen oder Elektronenstrahlschmelzen.

Bei dem Verfahren 10 wird das thermomechanische Verhalten beziehungsweise die Zielgröße beispielsweise unter Anwendung wenigstens einer numerischen Methode, beispielsweise der Finiten-Elemente-Methode, ermittelt, insbesondere berechnet. Hierfür kann das Modell 14 eine Geometrie des hergestellten beziehungsweise herzustellenden Bauelements diskret beschreiben beziehungsweise abbilden. Es kann sich bei dem Modell 14 also um ein diskretes Modell 14, insbesondere ein diskretes Geometriemodell, handeln. Hierfür kann das Modell 14 in eine Vielzahl an Zellen unterteilt sein.

Bei einem Schritt b) wird eine sich kontinuierlich in eine Bewegungsrichtung 20 entlang des Modells 14 bewegende Temperaturfront 22 ermittelt, insbesondere berechnet und/oder festgesetzt. Der Schritt b) kann auch als Schritt S2 bezeichnet werden. Die Temperaturfront 22 charakterisiert ein Abkühlungsverhalten des Bauelements bei der additiven Fertigung, das heißt insbesondere während und/oder nach dem Auftragen des Materials 18. Die Temperaturfront 22, das heißt insbesondere eine Temperatur, beispielsweise eine Temperaturverteilung, der Temperaturfront 22 und/oder eine Bewegungsgeschwindigkeit der Temperaturfront 22, kann mittels der elektronischen Recheneinrichtung 12 vorgegeben oder berechnet werden. Das Berechnen der Temperaturfront 22 kann beispielsweise mittels wenigstens eines Temperaturmodells erfolgen, welche das Abkühlungsverhalten des Bauelements, insbesondere des aufgetragenen Materials 18, bei der additiven Fertigung abbildet beziehungsweise simuliert. Die Bewegungsrichtung 20 entspricht einer Auftragsrichtung, in welcher bei der additiven Fertigung des Bauelements mehrere Schichten, das heißt insbesondere mehrere Schichten des Materials 18, aufeinander aufzutragen sind. Somit verläuft die Bewegungsrichtung 20 parallel zu der Auftragsrichtung, welche auch als Materialauftragungsrichtung bezeichnet werden kann. Wie in Fig. 2 gezeigt, verläuft die Bewegungsrichtung 20 in eine von dem Trägerkörper 16 wegweisende Richtung. Insbesondere verläuft die Bewegungsrichtung 20 schräg oder senkrecht zu dem Trägerkörper 16.

Ferner wird bei dem Verfahren 10 bei einem Schritt c), welcher auch als Schritt S3 bezeichnet werden kann, ein Temperaturfeld 24 des Modells 14, insbesondere zumindest des Materials 18, das heißt eines das Material 18 charakterisierenden Teilgebiets des Modells 14, in Abhängigkeit von der, insbesondere ermittelten, Temperaturfront 22 ermittelt, insbesondere berechnet, werden. Dieses Ermitteln kann derart erfolgen, dass das Modell 14, insbesondere zumindest das zuvor genannte Teilgebiet, mittels des Temperaturfelds 24, beispielsweise als

Randbedienung, beaufschlagt wird. Alternativ kann das Ermitteln des Temperaturfelds 24 derart erfolgen, dass in Abhängigkeit von der ermittelten Temperaturfront 22 ein Temperaturverteilung des Modells 14 vorgegeben wird. Das Temperaturfeld 24 ist in Fig. 2 veranschaulicht, in dem in Fig. 2 eine Temperaturverteilung des Modells 14 gezeigt ist, in welcher die Temperaturfront 22 gut zu erkennen ist. Somit ist in Fig. 2 insbesondere eine für die Simulation, das heißt insbesondere für das Ermitteln der Zielgröße, verwendete Temperaturverteilung gezeigt. Zum Veranschaulichen der Temperaturverteilung ist in Fig. 2 ebenfalls eine Legende 27 dargestellt, welche sich beispielsweise auf die Einheit Kelvin bezieht. Ferner wird bei dem Verfahren 10 bei einem Schritt d), welcher auch als Schritt S4 bezeichnet werden kann, mittels der elektronischen Recheneinrichtung 12 Teilbereich 26 des Modells 14 ermittelt, insbesondere festgelegt, wobei in dem Teilbereich 26 Temperaturwerte des ermittelten Temperaturfelds kleiner sind als ein Temperaturschwellenwert. Hierfür können beispielsweise diejenigen Zellen ermittelt werden, in welchen die Temperaturwerte des ermittelten Temperaturfelds 24 kleiner sind als der Temperaturschwellenwert. Der Teilbereich 26 ist vorzugsweise ein dem Material 18 zugeordnete Teilbereich. Dies bedeutet, dass der Teilbereich 26 beispielsweise ein Teil des zuvor genannten Teilgebiets ist. Vorliegend weist der Teilbereich 26 eine auf die Bewegungsrichtung 20 bezogene äußere Grenze 28 auf, wobei diese äußere Grenze 28 sich in der Bewegungsrichtung mit der Temperaturfront 22 mitbewegt. Die äußere Grenze 28 kann, insbesondere direkt, an der Temperaturfront 22 angeordnet sein oder die äußere Grenze 28 kann versetzt zu der Temperaturfront 22 angeordnet sein und sich somit der Temperaturfront 22 versetzt nachfolgend mit dieser mitbewegen.

Ferner wird bei dem Verfahren 10 vorliegend bei einem Schritt e), welcher auch als Schritt S5 bezeichnet werden kann, beispielsweise als die Zielgröße, eine durch thermisches Schrumpfen verursachte Verformung zumindest des Teilbereichs 26 mittels der elektronischen Recheneinrichtung 12 in Abhängigkeit von dem ermittelten Temperaturfeld 24 ermittelt, insbesondere berechnet. Dieses Ermitteln kann beispielsweise durch die genannte nummerische Methode, beispielsweise die Finite-Elemente-Methode erfolgen. Unter der Verformung kann vorliegend eine, insbesondere lokale, Bewegung beziehungsweise Verschiebung des Teilbereichs 26 verstanden werden. Ferner ist die durch das thermische Schrumpfen verursachte Verformung vorzugsweise eine durch zumindest lokales Erstarren des Bauelements, das heißt insbesondere des aufgetragenen Materials 18, bei der additiven Fertigung entstehende, insbesondere lokale, Verformung. Dies kann auch als lokaler Verzug bezeichnet werden.

Alternativ oder zusätzlich wird vorliegend bei dem Verfahren 10 bei dem Schritt e) mittels der elektronischen Recheneinrichtung 12 ein Spannungszustand, insbesondere eine mechanische Spannung, zumindest des ersten Teilbereichs 26, beispielsweise aus der ermittelten Verschiebung des ersten Teilbereichs 26, ermittelt, insbesondere berechnet. Dies erfolgt beispielsweise unter Anwendung der zuvor genannten nummerischen Methode. Unter der mechanischen Spannung des ersten Teilbereichs 26 wird vorliegend eine in dem ersten Teilbereich 26 vorherrschende mechanische Spannung verstanden. Die mechanische Spannung kann als die Zielgröße ermittelt werden. Selbstverständlich ist es möglich, dass sowohl die Verformung als auch die mechanische Spannung als Zielgrößen ermittelt werden können. Somit kann das Verfahren 10 ein Verfahren zum Ermitteln, insbesondere Vorhersagen, der Verformung und/oder der Spannung des Bauelements bei der additiven Fertigung sein.

Vorzugsweise werden die Schritte c) bis e) beziehungsweise die Schritte S3 bis S5, insbesondere zu unterschiedlichen Zeitpunkten, mehrfach wiederholt. Die jeweiligen Zeitpunkte sind dabei beispielsweise jeweilige Zeitschritte, welche auch als Simulationszeitpunkte zeichnet werden können. Dadurch kann die Bewegung der Temperaturfront 22 berücksichtigt werden, denn zu den unterschiedlichen Zeitpunkten befindet sich die Temperaturfront 22 an unterschiedlichen Positionen in dem Modell 14. Dadurch kann zu dem jeweiligen Zeitpunkt, das heißt zu unterschiedlichen Zeitpunkten der additiven Fertigung, das Ermitteln der Zielgröße beziehungsweise des thermischen Verhaltens beim additiven Fertigen ermittelt beziehungsweise simuliert werden.

Der Temperaturschwellenwert entspricht vorzugsweise einer Solidustemperatur des Materials 18. Dies bedeutet, dass der Temperaturschwellenwert die Solidustemperatur des Materials 18 sein kann. Dadurch kann die Verformung infolge des durch lokales Erstarren entstehenden Verzugs bei der additiven Fertigung des Bauelements ermittelt werden.

In dem Ausführungsbeispiel ist es vorgesehen, dass der Schritt d) beziehungsweise S4 ein Ermitteln, insbesondere Festlegen, eines von dem ersten Teilbereich 26 unterschiedlichen, zweiten Teilbereichs 30 des Modells 14 umfasst, wobei in dem zweiten Teilbereich 30 die Temperaturwerte des ermittelten Temperaturfelds mindestens so groß sind wie der Temperaturschwellenwert. Dadurch kann der Teilbereich 26, welcher auch als erster Teilbereich 26 bezeichnet werden kann, das erstarrte Material 18 charakterisieren und der zweite Teilbereich 30 kann nicht erstarrtes Material 18, das heißt insbesondere flüssiges Material 18 und/oder noch nicht aufgebrachtes Material 18, charakterisieren. Unter dem nicht aufgetragenen Material 18 wird vorliegend noch aufzubringendes Material 18 verstanden. Dies ist ein Teil des Materials 18, wobei dieser Teil zum aktuell simulierten Zeitpunkt bei der additiven Fertigung noch nicht aufgetragen worden ist, da dieses Auftragen erst später beziehungsweise am späteren der Zeitpunkte erfolgt.

Wie in Fig. 2 zu erkennen, ist die Grenze 28 vorliegend eine Grenze zwischen den Teilbereichen 26, 30. Dies bedeutet, dass die Teilbereiche 26, 30 durch die Grenze 28 voneinander unterteilt sind.

Ferner ist es in dem Ausführungsbeispiel vorgesehen, dass der Schritt e) beziehungsweise S5 ein Ermitteln, insbesondere Berechnen, der Verformung des zweiten Teilbereichs 30 umfasst, beispielsweise unter Anwendung der zuvor genannten nummerischen Methode. Die ermittelte Verformung ist dabei vorzugsweise eine Feldgröße, das heißt ein Verformungsfeld des zweiten Teilbereichs 30. Vorzugsweise ist es vorgesehen, dass zum Ermitteln der Verformung des zweiten Teilbereichs 30 eine virtuelle Steifigkeit verwendet wird, welche mindestens tausend, insbesondere zehntausend, mal kleiner ist als eine, insbesondere reale, Steifigkeit des Materials 18. Vorzugsweise wird zum Ermitteln der Verformung des ersten Teilbereichs 26 die, insbesondere reale, Steifigkeit des Materials 18 verwendet.

Ferner ist es vorzugsweise vorgesehen, dass beim Ermitteln der Verschiebung des zweiten Teilbereichs 30 der zweite Teilbereich 30, beispielsweise ein Rand 32 des zweiten Teilbereichs 30 und/oder ein Volumen, insbesondere in dem Volumen angeordnete Punkte, des zweiten Teilbereichs 30, zumindest in einer sich senkrecht zu der Bewegungsrichtung erstreckenden Richtung 34 gefedert fixiert wird. Der Rand 32 ist dabei vorzugsweise ein den zweiten Teilbereich 30 senkrecht zu der Bewegungsrichtung 20, das heißt in der Richtung 34, nach außen begrenzender Rand 32. Dies bedeutet, dass der Rand 32 sich vorliegend schräg oder senkrecht zu der Grenze 28 erstreckt. Besonders bevorzugt wird beim Ermitteln der Verschiebung des zweiten Teilbereichs der zweite Teilbereich 30, beispielsweise der Rand 32 und/oder das Volumen des zweiten Teilbereichs 30, in zumindest zwei Raumrichtungen oder drei Raumrichtungen gefedert fixiert. Der Rand 32 und/oder Punkte des Volumens kann beziehungsweise können somit mittels einer virtuellen, das heißt einer nummerischen, Feder in der Simulation befestigt werden. Dadurch kann eine unphysikalische Einschnürung, beispielsweise in der Richtung 34, des zweiten Teilbereichs 30 vermieden werden. Eine solche Einschnürung ist insbesondere deshalb unphysikalisch, da der zweite Teilbereich 30 zumindest teilweise, insbesondere überwiegend oder vollständig, zum aktuellen Zeitpunkt noch nicht aufgetragenes Material 18 charakterisiert, das Material 18 bei der additiven Fertigung real jedoch stets ohne eine solche Einschnürung aufgetragen wird. In Fig. 2 ist zu erkennen, dass die Einschnürung vermieden werden kann, denn in Fig. 2 schließen sich die Teilbereiche 26, 30 bündig aneinander an.

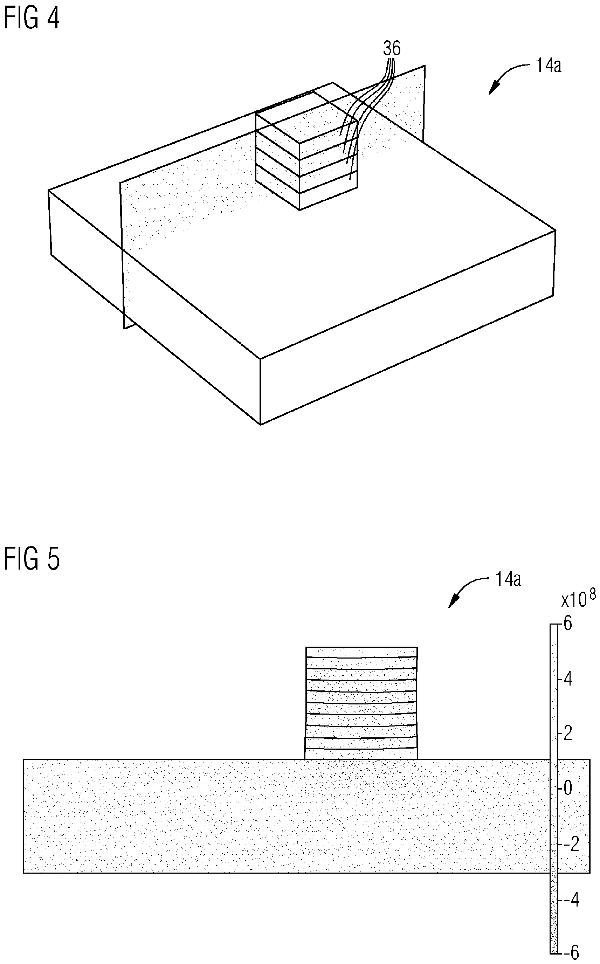

Zum Vergleich mit dem Verfahren 10 ist in Fig. 3 und Fig. 4 jeweils ein herkömmliches Verfahren veranschaulicht. Dabei ist in Fig. 3 und Fig. 4 jeweils ein herkömmliches Modell 14a des Bauelements in einer jeweiligen schematischen Perspektivansicht gezeigt. Bei dem herkömmlichen Verfahren wird das zu simulierende Bauelement beziehungsweise dessen herkömmliches Modell 14a vertikal, also in der gleichen Ebene, in der bei der additiven Fertigung der schichtweise Materialaufbau erfolgt, in einer Anzahl von Lagen 36 unterteilt. Diese Lagen 36 entsprechen insbesondere nicht den tatsächlich bei der additiven Fertigung verwendeten Aufbaulagen, die sich insbesondere durch eine sehr dünne Dicke von beispielsweise zwischen 20 und 100 µm auszeichnen. Stattdessen werden aus Gründen der numerischen Performance vielmehr sogenannte Makrolagen als die genannten Lagen 36 von typischerweise 1 bis 5 mm Stärke verwendet. Diese Lagen 36 können nacheinander aktiviert werden. Im Moment der Aktivierung kann davon ausgegangen werden, dass sich jeweils die ganze Lage 36 auf einer hohen Temperatur, beispielsweise der Solidustemperatur, des verwendeten Materials 18 befindet. Im Moment der Aktivierung kann die jeweils aktivierte Lage 36 beginnen zu schrumpfen. Die Schrumpfung kann dabei durch die darunterliegenden, bereits verfestigten Lagen 36 behindert sind, sodass der entstandene Verzug kleiner ist als der durch eine vorgegebene Schrumpfungsrate der jeweiligen Lage 36 maximal erreichbare Verzug, was zur Ausbildung von Eigenspannungszuständen führen kann. Die Lagen 36, die sich oberhalb der jeweils aktivierten Lage 36 befinden, können zum Moment der Aktivierung dieser Lage nicht existieren, also mechanisch inaktiv sein. Daher können die von Elementen inaktiver Lagen 36 akkumulierten Dehnungen bei der Aktivierung zu Null gesetzt werden, sodass sie nicht zu den Verschiebungen und Spannungen der aktivierten Schicht beitragen. Diese herkömmliche Vorgehensweise kann auch als Lage zu Lage Simulation (Layer by Layer Simulation) bezeichnet werden. In Fig. 3 und 4 ist dabei eine einfache Struktur eines additiv aufgebauten Würfels als das Bauelement gezeigt, wobei dieser Würfel beispielsweise eine Kantenlänge von 10 mm aufweist. In Fig. 3 und Fig. 4 sind dabei jeweils unterschiedliche Lagen 36 beziehungsweise Makrolagendicken. Eine Makrolagendicke der jeweiligen Lage 36 beträgt in Fig. 3 dabei beispielsweise 1 mm und in Fig. 4 beispielsweise 2,5 mm.

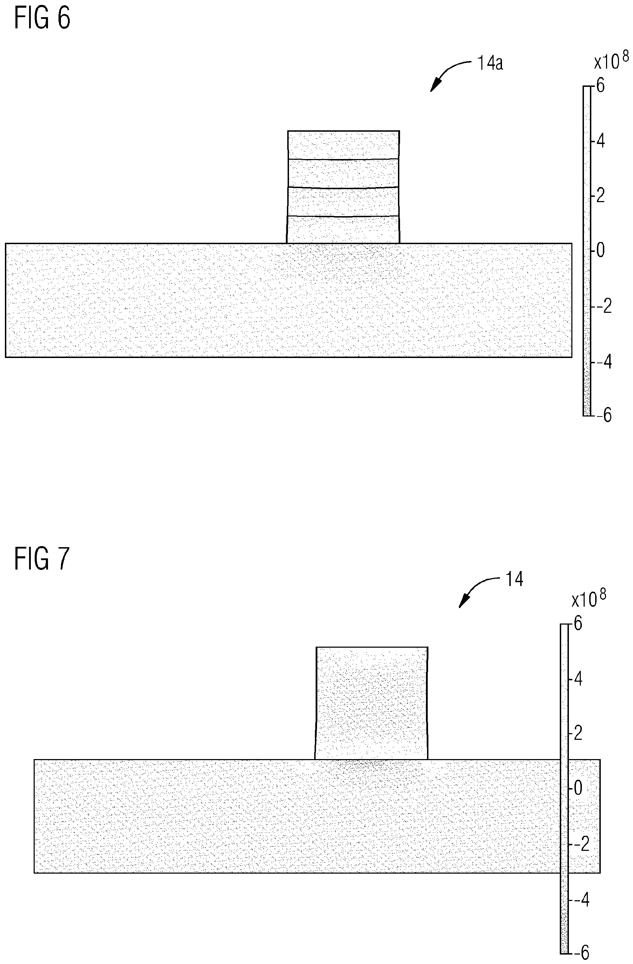

In Fig. 5 ist in einer schematischen Darstellung eine mittels des herkömmlichen Verfahrens berechnete mechanische Spannung, insbesondere Eigenspannung, des herkömmlichen Modells 14a gezeigt, wobei in Fig. 5 sich die gezeigten Spannungen auf das herkömmliche Modell 14a aus Fig. 3 bezieht. Fig. 6 zeigt eine äquivalente Darstellung, jedoch beziehen sich die in Fig. 6 gezeigten Spannungen auf das herkömmliche Modell 14a gemäß Fig. 4. Somit sind in Fig. 5 und Fig. 6 Simulationsergebnisse für unterschiedliche Makrolagendicken gezeigt. Dabei ist in den Fig. 5 und 6 insbesondere eine Verteilung von berechneten Eigenspannungen in XX-Richtung bei gleichem vorgegebenem Materialschrumpfungsverhalten dargestellt. In anderen Worten sind in Fig. 5 und Fig. 6 Darstellungen von nach einer Methode gemäß dem Stand der Technik berechneten Spannungsverteilungen gezeigt, wobei in Fig. 5 eine Makrolagendicke von 1 mm verwendet worden ist und in Fig. 6 eine Makrolagendicke von 2,5 mm verwendet worden ist. Dabei kann in Zusammenschau von Fig. 5 und Fig. 6 erkannt werden, dass die simulierte Spannungsverteilung offensichtlich unterschiedlich ist, denn die künstliche Wahl der Makrolagendicke jeweils unterschiedliche schichtförmige artifizielle Spannungsverteilungen erzeugen, die nicht der Realität entsprechen.

Demgegenüber kann bei dem Verfahren 10 auf solche künstlichen Makrolagen verzichtet werden. Dies bedeutet, dass bei dem Verfahren 10 das Modell 14 frei von Makrolagen ist, wodurch insbesondere die für die Finite-Elemente-Methode verwendeten Zellen insbesondere nicht zu Makrolagen zusammengefasst werden. Fig. 7 zeigt in einer schematischen Darstellung eine mittels des Verfahrens 10 ermittelte Spannungsverteilung, insbesondere eine XX-Komponente eines ermittelten Spannungstensors. Wie besonders gut in einem Vergleich zwischen Fig. 7 und in Fig. 5 und 6 erkannt werden kann, bewirkt das Verfahren 10 im Gegensatz zu dem herkömmlichen Verfahren keine unphysikalische schichtförmige artifizielle Spannungsverteilung. Es kann dadurch eine besonders realistische Spannungsverteilung mittels des Verfahrens 10 ermittelt werden. Dabei können insbesondere Berechnungsartefakte gemäß Fig. 5 und Fig. 6 vermieden werden.

Das Verfahren 10 kann Teil eines Messverfahrens sein, was bedeutet, dass das Verfahren 10 insbesondere ein Auswertungsschritt eines Messverfahrens sein kann. Dabei kann, beispielsweise in einem Schritt S1*, ein Probekörper mittels additiver Fertigung hergestellt werden. Ferner kann, beispielsweise bei einem Schritt S2*, eine das thermomechanische Verhalten beim additiven Fertigen des Probekörpers charakterisierende Zielgröße messtechnisch ermittelt werden. Ferner kann mittels der elektronischen Recheneinrichtung 12 die das thermomechanische Verhalten beim additiven Fertigen des Probekörpers charakterisierende Zielgröße simulativ vermittelt werden, indem zumindest die Schritte a) bis e) beziehungsweise S1 bis S5 mittels der elektronischen Recheneinrichtung 12 für den Probekörper durchgeführt werden, was auch als S3* bezeichnet werden kann. Anschließend kann mittels der elektronischen Recheneinrichtung 12 eine effektive Wärmedehnung aus der messtechnisch ermittelten Zielgröße und der simulativ ermittelten Zielgröße ermittelt, insbesondere berechne werden. Dies kann bei einem als S4* bezeichneten Schritt erfolgen.

Der Schritt S3* kann somit folgende Schritte umfassen:
- Erzeugen eines Modells des mittels additiver Fertigung herzustellenden oder hergestellten Probekörpers; und
- Ermitteln einer sich kontinuierlich in eine Bewegungsrichtung des Modells des Probekörpers bewegenden Temperaturfront, welche ein Abkühlungsverhalten des Probekörpers bei der additiven Fertigung charakterisiert, wobei die Bewegungsrichtung einer Auftragsrichtung entspricht, in welcher bei der additiven Fertigung des Probekörpers mehrere Schichten aufeinander aufzutragen sind; und
- Ermitteln eines Temperaturfelds des Modells des Probekörpers in Abhängigkeit von der für den Probekörper ermittelten Temperaturfront; und
- Ermitteln eines Teilbereichs des Modells des Probekörpers, wobei in diesem Teilbereich Temperaturwerte des ermittelten Temperaturfelds des Modells des Probekörpers kleiner sind als ein Temperaturschwellenwert und sich eine in der Bewegungsrichtung äußere Grenze des Teilbereichs des Modells des Probekörpers in der Bewegungsrichtung mit der Temperaturfront des Modells des Probekörpers mitbewegt; und
- Ermitteln einer durch thermisches Schrumpfen verursachten Verformung des Teilbereichs des Modells des Probekörpers in Abhängigkeit von dem ermittelten Temperaturfeld des Modells des Probekörpers; und/oder
- Ermitteln eines Spannungszustands, insbesondere einer mechanischen Spannung, des Teilbereichs des Modells des Probekörpers aus der ermittelten Verformung des Teilbereichs des Teilbereichs des Modells des Probekörpers.

Danach können zumindest die Schritte a) bis e) beziehungsweise S1 bis S5 durchgeführt werden, wobei in Schritt e) beziehungsweise S5 zum Ermitteln der durch das thermische Schrumpfen verursachten Verschiebung des ersten Teilbereichs 26 des Modells 14 des Bauelements und/oder zum Ermitteln des Spannungszustands des ersten Teilbereichs 26 des Modells 14 des Bauelements die ermittelte effektive Wärmedehnung als Wärmedehnungskoeffizient verwendet wird. Dadurch können auf Basis einer Vermessung des Probekörpers Erkenntnisse für das thermomechanische Verhalten beim additiven Fertigen von Bauelementen gewonnen werden, welche unterschiedlich zu dem Probekörper gestaltet sind. Es kann somit die Simulation in den Messprozess eingebunden werden, um bestmögliche Prognosen basierend auf der Messung realisieren zu können.

Insgesamt ist erkennbar, dass, insbesondere durch den Verzicht auf künstliche Makrolagen, bei dem Verfahren 10 ein Temperaturmodell eingeführt werden kann. Statt einer schichtweisen Abkühlung von je einer Makrolage kann von einer kontinuierlich sich in Fig. 2 nach oben (in Aufbaurichtung) bewegenden thermischen Front als die Temperaturfront 22 ausgegangen werden. Im Gleichtakt mit der sich nach oben fortbewegenden Temperaturfront 22 kann eine kontinuierlich sich bewegende mechanische Aktivierung der Zellen des Modells 14, insbesondere als der erste Teilbereich 26, stattfinden, sobald die Temperatur der Temperaturfront 22 sich unterhalb einer vorbestimmten Grenztemperatur als der genannte Temperaturschwellenwert einstellt. Sich in Fig. 2 oberhalb einer Aktivierungszone befindende Bereiche, insbesondere in Form des zweiten Teilbereichs 30, können mit Hilfe der numerisch definierten dreidimensionalen Feder an ihrem durch eine CAD-Zeichnung und/oder ein CAD-Modell vorbestimmten Ort festgehalten werden. Eine Federkonstante dieser Feder kann nach der mechanischen Aktivierung auf Null gefahren werden, sodass sich dann eine Gleichgewichtslage ausbilden kann.

In Fig. 1 ist ebenfalls ein Computerprogramm 38 und ein elektronisch lesbarer Datenträger 40 veranschaulicht. Das Computerprogramm 38 kann direkt in einen Speicher der elektronischen Recheneinrichtung 12 geladen werden, wobei Programmmittel vorgesehen sind, um die Schritte des Verfahrens 10, beispielsweise zumindest die Schritte S1 bis S5, und beispielsweise die Schritte S3* und S4*, auszuführen, wenn das Programm in der elektronischen Recheneinrichtung 12 ausgeführt wird. Der elektronisch lesbare Datenträger 40 weist darauf gespeicherte elektronisch lesbare Steuerinformationen auf, welche zumindest das Computerprogramm 38 umfassen und derart ausgestaltet sind, dass sie bei Verwendung des Datenträgers 40 in der elektronischen Recheneinrichtung 12 das Verfahren 10, beispielsweise zumindest die Schritte S1 bis S5, und beispielsweise die Schritte S3* und S4*, durchführen.

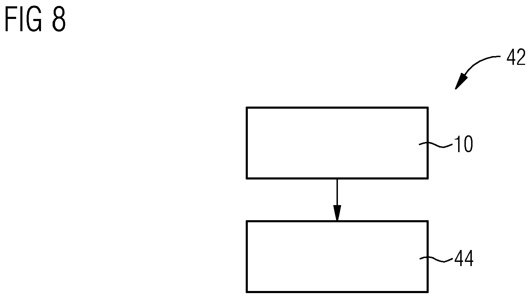

In Fig. 8 ist ein Ablaufdiagramm zum Veranschaulichen eines Verfahrens 42 zum Herstellen des Bauelements gezeigt. Bei dem Verfahren 42 wird das Bauelement in Abhängigkeit von der nach dem Verfahren 10 ermittelten Zielgröße mittels additiver Fertigung hergestellt. Dies bedeutet, dass zunächst das Verfahren 10 durchgeführt wird, wodurch die Zielgröße ermittelt wird. Anschließend erfolgt das, insbesondere tatsächliche, Herstellen 44 des Bauelements, wobei dieses Herstellen von der ermittelten Zielgröße abhängt. Dies bedeutet, dass mittels der Zielgröße Erkenntnisse über das mittels der additiven Fertigung herzustellende Bauelement gewonnen werden können, welche in eine Auslegung des Bauelements und/oder eine Prozessgestaltung der additiven Fertigung einfließen können. Dadurch kann beispielsweise eine Qualität des hergestellten Bauelements besonders erhöht werden. Dies kann insbesondere dadurch realisiert werden, dass die mittels des Verfahrens 10 ermittelte Zielgröße besonders präzise ermittelt werden kann.

### Bezugszeichenliste

- 10: Verfahren
- 12: elektronische Recheneinrichtung
- 14: Modell
- 14a: herkömmliches Modell
- 16: Trägerkörper
- 18: Material
- 20: Bewegungsrichtung
- 22: Temperaturfront
- 24: Temperaturfeld
- 26: erster Teilbereich
- 27: Legende
- 28: Grenze
- 30: zweiter Teilbereich
- 32: Rand
- 34: Richtung
- 36: Lagen
- 38: Computerprogramm
- 40: Datenträger
- 42: Verfahren
- 44: Herstellen
- S1: Schritt
- S1*: Schritt
- S2: Schritt
- S2*: Schritt
- S3: Schritt
- S3*: Schritt
- S4: Schritt
- S4*: Schritt
- S5: Schritt

## Patentansprüche

1. Verfahren zum Ermitteln einer ein thermomechanisches Verhalten beim additiven Fertigen eines Bauelements charakterisierenden Zielgröße, mit den mittels einer elektronischen Recheneinrichtung (12) durchgeführten Schritten (S1 bis S5):
• a) Erzeugen eines Modells (14) des mittels additiver Fertigung herzustellenden Bauelements;
• b) Ermitteln einer sich kontinuierlich in eine Bewegungsrichtung (20) entlang des Modells (14) bewegenden Temperaturfront (22), welche ein Abkühlungsverhalten des Bauelements bei der additiven Fertigung charakterisiert, wobei die Bewegungsrichtung (20) einer Auftragsrichtung entspricht, in welcher bei der additiven Fertigung des Bauelements mehrere Schichten aufeinander aufzutragen sind;
• c) Ermitteln eines Temperaturfelds (24) des Modells (14) in Abhängigkeit von der Temperaturfront (22);
• d) Ermitteln eines Teilbereichs (26) des Modells (14), wobei in dem Teilbereich (26) Temperaturwerte des ermittelten Temperaturfelds (24) kleiner sind als ein Temperaturschwellenwert und sich eine in der Bewegungsrichtung (20) äußere Grenze (28) des Teilbereichs (26) in der Bewegungsrichtung (20) mit der Temperaturfront (22) mitbewegt; und
• e) Ermitteln einer durch thermisches Schrumpfen verursachten Verformung des Teilbereichs (26) in Abhängigkeit von dem ermittelten Temperaturfeld (24) und/oder Ermitteln eines Spannungszustandes des Teilbereichs (26) in Abhängigkeit von dem ermittelten Temperaturfeld (24);

2. Verfahren (10) nach Anspruch 1,
**dadurch gekennzeichnet, dass**
der Temperaturschwellenwert einer Solidustemperatur eines Materials (18) des Bauelements entspricht.

3. Verfahren (10) nach Anspruch 1 oder 2,
**dadurch gekennzeichnet, dass**
• Schritt d) ein Ermitteln eines zweiten Teilbereichs (30) des Modells (14) umfasst, wobei in dem zweiten Teilbereich (30) die Temperaturwerte des ermittelten Temperaturfelds (24) mindestens so groß sind wie der Temperaturschwellenwert, und
• Schritt e) ein Ermitteln einer Verformung des zweiten Teilbereichs (30) umfasst.

4. Verfahren (10) nach Anspruch 3,
**dadurch gekennzeichnet, dass**
zum Ermitteln der Verformung des zweiten Teilbereichs (30) eine virtuelle Steifigkeit verwendet wird, welche mindestens tausendmal, insbesondere zehntausendmal, kleiner ist als eine Steifigkeit eines Materials (18) des Bauelements.

5. Verfahren (10) nach Anspruch 3 oder 4,
**dadurch gekennzeichnet, dass**
beim Ermitteln der Verformung des zweiten Teilbereichs (30) der zweite Teilbereich (30) zumindest in einer sich senkrecht zu der Bewegungsrichtung (20) erstreckenden Richtung (34) gefedert fixiert wird.

6. Verfahren nach einem der vorhergehenden Ansprüche,
**dadurch gekennzeichnet, dass**
das additive Fertigen Laserstrahlschmelzen oder Elektronenstrahlschmelzen ist.

7. Verfahren (10) nach einem der vorhergehenden Ansprüche,
**gekennzeichnet durch** die Schritte (S1* bis S4*):
• Herstellen eines Probekörpers mittels additiver Fertigung;
• Messtechnisches Ermitteln einer das thermomechanische Verhalten beim additiven Fertigen des Probekörpers charakterisierenden Zielgröße;
• Simulatives Ermitteln der das thermomechanische Verhalten beim additiven Fertigen des Probekörpers charakterisierenden Zielgröße, indem zumindest die Schritte a) bis e) mittels der elektronischen Recheneinrichtung (12) für den Probekörper durchgeführt werden; und
• Ermitteln einer effektiven Wärmedehnung aus der messtechnisch ermittelten Zielgröße und der simulativ ermittelten Zielgröße,
wobei in Schritt e) zum Ermitteln der durch das thermische Schrumpfen verursachten Verschiebung des Teilbereichs (26) des Modells (14) des Bauelements und/oder zum Ermitteln des Spannungszustandes des Teilbereichs (26) des Modells (14) des Bauelements die ermittelte effektive Wärmedehnung als Wärmdehnungskoeffizient verwendet wird.

8. Elektronische Recheneinrichtung (12), welche gezielt dazu eingerichtet ist, ein Verfahren nach einem der Ansprüche 1 bis 6 durchzuführen.

9. Computerprogramm (38), welches direkt in einen Speicher einer elektronischen Recheneinrichtung (12) ladbar ist, mit Programm-Mitteln, um die Schritte des Verfahrens nach einem der Ansprüche 1 bis 6 auszuführen, wenn das Programm in der elektronischen Recheneinrichtung (12) ausgeführt wird.

10. Elektronisch lesbarer Datenträger (40) mit darauf gespeicherten elektronisch lesbaren Steuerinformationen, welche zumindest ein Computerprogramm (38) nach Anspruch 10 umfassen und derart ausgestaltet sind, dass sie bei Verwendung des Datenträgers (40) in einer elektronischen Recheneinrichtung (12) ein Verfahren (10) nach einem der Ansprüche 1 bis 6 durchführen.

11. Verfahren (42) zum Herstellen eines Bauelements, bei welchem das Bauelement in Abhängigkeit von der nach einem Verfahren (10) nach einem der Ansprüche 1 bis 7 ermittelten Zielgröße mittels additiver Fertigung hergestellt wird.
